# EUROPÄISCHE PATENTSCHRIFT

(11) **EP 1 246 287 B1**
(45) Veröffentlichungstag und Bekanntmachung des Hinweises auf die Patenterteilung: **11.05.2011**
(21) Anmeldenummer: 01130792.3
(22) Anmeldetag: 22.12.2001
(51) Int. Cl.: H01M 8/06

(54) **Kombinierte Kraft- Wärmeanlage mit Gaserzeugungssystem und Brennstoffzellen sowie Verfahren zu ihrem Betrieb**
Combined heat and power apparatus with gas producing system and fuel cells and method of operation
Appareil combiné pour la production de chaleur et de courant avec système de production de gaz et piles à combustible et procédé de fonctionnement

(30) Priorität: 31.03.2001 EP 01108230
(43) Veröffentlichungstag der Anmeldung: 02.10.2002
(73) Patentinhaber: Viessmann Werke GmbH & Co KG, 35107 Allendorf (DE)
(72) Erfinder: Baumann,Frank Dr., 63755 Alzenau (DE); Wieland,Stefan Dr., 63069 Offenbach (DE); Britz, Peter Dr., 35108 Allendorf (DE); Heikrodt,Klaus Dr., 35108 Allendorf (DE)
(74) Vertreter: Wolf, Michael

(56) Entgegenhaltungen:
- EP-A- 0 959 512
- EP-A- 0 985 635
- EP-A- 1 033 769
- DE-A- 4 005 468
- US-A- 3 488 171
- US-A- 3 539 395
- US-A- 3 615 850
- US-A- 5 997 594
- US-B1- 6 190 623
- PATENT ABSTRACTS OF JAPAN vol. 2000, no. 12, 3. Januar 2001 (2001-01-03) -& JP 2000 256003 A (OSAKA GAS CO LTD), 19. September 2000 (2000-09-19)

## Beschreibung

Die vorliegende Erfindung beschreibt eine kombinierte Kraft-Wärmeanlage mit integriertem Gaserzeugungssystem sowie ein Verfahren zu ihrem Betrieb. Die Kraft-Wärmeanlage enthält eine Brennstoffzellenanlage zur Erzeugung von elektrischer Energie. Als Energieträger wird Erdgas eingesetzt, welches durch Dampfreformierung in ein Wasserstoff enthaltendes Brenngas für die Brennstoffzellenanlage überfuhrt wird. Der Wärmeinhalt des Reformatgases wird zum Teil als Nutzwärme zum Beispiel zur Beheizung von Gebäuden und zur Warmwasserbereitung benutzt. Mit dem Anodenabgas der Brennstoffzellenanlage wird der Dampfreformer beheizt.

Der für den Betrieb einer Brennstoffzellenanlage benötigte Wasserstoff kann in einem vorgeschalteten Gaserzeugungssystem durch sogenannte Reformierung von Kohlenwasserstoffen gewonnen werden. Die Dampfreformierung von Kohlenwasserstoffen zur Herstellung von Wasserstoff ist ein bekannter Prozess. Gemäß Gleichung (1) bildet sich dabei ein Reformatgas, welches Wasserstoff und Kohlenmonoxid enthält. In Gleichung (1) wird beispielhaft Methan als Kohlenwasserstoff verwendet.

Dampfreformierung CH₄+H₂O→3 H₂+CO

Die Dampfreformierung gemäß Gleichung (1) wird gewöhnlich so geführt, daß das Methan möglichst vollständig umgesetzt wird. Dies erfordert hohe Arbeitstemperaturen des Dampfreformers zwischen 700 und 800 °C.

Das im Reformatgas enthaltene Kohlenmonoxid ist ein starkes Katalysatorgift für die Anodenkatalysatoren von Brennstoffzellen und muß daher möglichst weitgehend entfernt werden. Das im Reformatgas enthaltene Kohlenmonoxid wird daher in der Regel mit Wasser gemäß Gleichung (2) zu Wasserstoff und Kohlenmonoxid umgesetzt (Wassergas-Shiftreaktion).

Wassergas-Shiftreaktion CO+H₂O→3 H₂+CO₂

Zur möglichst vollständigen Umsetzung des Kohlenmonoxids werden häufig zwei Shiftreaktionen vorgenommen. Eine Hochtemperatur-Shiftreaktion bei Temperaturen zwischen 350 und 450 °C und eine Niedertemperatur-Shiftreaktion bei Temperaturen zwischen 180 und 250 °C. Die Kühlung des Reformatgases vor Eintritt in die Shiftreaktoren auf die jeweiligen Arbeitstemperaturen wird mit Hilfe von Wärmetauschern vorgenommen. Die dem Reformatgas entzogene Wärme kann für die Beheizung von Gebäuden genutzt werden.

Mit Hilfe der Shiftreaktionen kann der Gehalt des Reformatgases an Kohlenmonoxid jedoch nur auf die bei der jeweiligen Reaktionstemperatur gültige Gleichgewichtskonzentration vermindert werden. Sie beträgt bei der Niedertemperatur-Shiftreaktion mit einer Arbeitstemperatur im Bereich von 180 bis 250 °C etwa 0,5 Vol.-%. Auch dieser Gehalt an Kohlenmonoxid ist noch zu hoch und muß weiter auf möglichst unter 100, besser unter 50 Vol.-ppm, vermindert werden. Gewöhnlich wird hierfür die selektive Oxidation von Kohlenmonoxid zu Kohlendioxid an geeigneten Katalysatoren eingesetzt. Die selektive Oxidation wird auch als präferentielle Oxidation, Abkürzung PROX, bezeichnet. Hierbei besteht die Gefahr, daß wegen ungenügender Selektivität auch ein gewisser Teil des Wasserstoffs zu Wasser oxidiert wird und somit nicht mehr als Brenngas für die Brennstoffzelle zur Verfügung steht. Alternativ besteht die Möglichkeit, das Kohlenmonoxid mit dem Wasserstoff des Reformatgases entsprechend Gleichung (3) zu Methan umzusetzen (Methanisierung). Im Unterschied zur präferentiellen Oxidation ist die Methanisierung von Kohlenmonoxid inhärent mit dem Verbrauch von Wasserstoff verbunden.

Methnisierung 3 H₂+CO→CH₄+H₂O

Brennstoffzellen mit vorgeschaltetem Gaserzeugungssystem werden für die Versorgung von Gebäuden mit elektrischem Strom und Wärme eingesetzt. Ein solches System ist im Dokument US 3,615,850 offenbart. Im Rahmen dieser Erfindung wird ein solches System als kombinierte Kraft-Wärmeanlage bezeichnet.

Der im Brenngas für die Brennstoffzelle enthaltene Wasserstoff wird an der Anode der Brennstoffzellen nicht vollständig umgesetzt. Etwa 20 Vol.-% des der Brennstoffzelle zugeführten Wasserstoffs verlassen die Brennstoffzellenanlage mit dem Anodenabgas. Um die eingesetzten Primärenergieträger, wie zum Beispiel Erdgas, möglichst effizient auszunutzen, wird der nicht umgesetzte Wasserstoff im Anodenabgas der Brennstoffzelle gewöhnlich zur Beheizung des Dampfreformers auf seine Arbeitstemperatur in einem Gasbrenner verbrannt.

Für die Dosierung der Gasmengen zum Betrieb von Gasbrennern oder Dampfreformern werden Bauteile benötigt, die sowohl den Gasdurchfluß messen als auch die durchströmende Gasmenge entsprechend der Vorgaben regeln. Diese Bauteile werden als Gasregelstrecken bezeichnet.

Gasbrenner unterliegen strengen Sicherheitsvorschriften. So muß der Gasbrenner durch Überwachung der Brennerflamme eine rasche Notabschaltung der Brennstoffzufuhr bei Verlöschen der Brennerflamme gewährleisten. Zur Überwachung der Brennerflamme werden Ionisationsdetektoren eingesetzt, die jedoch für eine störungsfreie Funktion einen Mindestanteil von Kohlenwasserstoffen im zugeführten Brennstoff benötigen. Bei Betrieb eines Brenners mit reinem Wasserstoff werden nicht genügend Ionen in der Flamme erzeugt, die für den Detektor notwendig sind. Die Verbrennung des Anodenabgases im Gasbrenner des Dampfreformers bereitet daher bei den aus dem Stand der Technik bekannten Anlagen der beschriebenen Art erhebliche Probleme bei der Überwachung des Brenners.

Es war daher Aufgabe der vorliegenden Erfindung, eine kombinierte Kraft-Wärmeanlage anzugeben, welche so betrieben werden kann, daß damit die genannten Sicherheitsvorschriften eingehalten werden.

Diese Aufgabe wird durch eine Anlage gemäß Patentanspruch 1 gelöst. Vorteilhafte Ausführungsformen sind in den Unteransprüchen 2 bis 4 angegeben. Anspruch 5 beschreibt ein Verfahren zum Betreiben der Anlage unter Einhaltung der genannten Sicherheitsvorschriften.

Die erfindungsgemäße Kraft-Wärmeanlage verwendet zur Entfernung von Kohlenmonoxid aus dem Reformatgasstrom des Dampfreformers nur einen Niedertemperatur-Shiftreaktor und einen nachgeschalteten Methanisierungsreaktor, wobei zwischen Dampfreformer und Niedertemperatur-Shiftreaktor ein Wärmetauscher zur Kühlung des Reformatgases und Auskopplung der Wärmeenergie angeordnet ist. Insgesamt ist die erfindungsgemäße Anordnung wesentlich einfacher und kostengünstiger aufgebaut als bekannte Anlagen aus dem Stand der Technik. Der Methanisierungsreaktor übernimmt die Entfernung des restlichen Kohlenmonoxids aus dem Reformatgas auf die erforderliche Restkonzentration von unter 100 Vol.-ppm. Ein Methanisierungsreaktor ist wesentlich einfacher aufgebaut und kann einfacher betrieben werden als die üblicherweise eingesetzten PROX-Reaktoren, die eine aufwendige und präzise Steuerung der Luftzufuhr für die selektive Oxidation von Kohlenmonoxid benötigen.

Die Kraft-Wärmeanlage wird erfindungsgemäß so betrieben, daß im Reformatgas und demzufolge auch im Anodenabgas noch eine so hohe Konzentration von Methan enthalten ist, die eine ausreichende Erzeugung von Ionisationsprodukten bei der Verbrennung im Gasbrenner des Dampfreformers gewährleistet, so daß das Vorhandensein der Flamme mit Hilfe eines Ionisationsdetektor sicher nachgewiesen werden kann. Hierfür sind Arbeitstemperaturen im Dampfreformer im Bereich von etwa 500 bis 750 °C notwendig. Das den Dampfreformer verlassende Reformat hat in diesem Fall einen Methangehalt von etwa 5 bis 10 Vol.-%.

Das erfindungsgemäße Verfahren nutzt also den an sich weniger vorteilhaften Temperaturbereich von 500 °C bis 750 °C für den Dampfreformierungsprozeß. Die geringere Arbeitstemperatur des Dampfreformers hat allerdings eine Verminderung des Kohlenmonoxidgehaltes im Reformat zur Folge, so daß auf die übliche Hochtemperatur-Shiftstufe verzichtet werden kann und die Kraft-Wärmeanlage insgesamt eine geringere Baugröße hat. Aufgrund der niedrigeren Höchsttemperatur im Dampfreformer ist eine geringere Wärmeisolation erforderlich und die dem Reformer zur Verfügung zu stellende Wärmeleistung kann geringer bemessen sein. Darüber hinaus ergibt sich aus der Reduzierung der Anzahl der Shiftstufen ferner noch der Vorteil, daß sich der Druckverlust innerhalb der erfindungsgemäßen Kraft-Wärmeanlage insgesamt verringert, was sich positiv auf ihren Wirkungsgrad auswirkt.

Die Verwendung einer Methanisierungsreaktion zur Verminderung des Kohlenmonoxidgehaltes im Reformat erlaubt darüber hinaus vorteilhaft den Verzicht auf eine Gasfeinreinigung mit Hilfe einer sonst üblichen PROX-Stufe, die bei bekannten Kraft-Wärmeanlagen zur Konvertierung von restlichem Kohlenmonoxid in Kohlendioxid eingesetzt wird. Kohlendioxid ist ein bezüglich der Brennstoffzelle inert wirkendes Gas, welches im Gegensatz zu dem zusätzlich vorhandenen Kohlenwasserstoffgas für den weiteren Prozess verloren ist, während das Kohlenwasserstoffgas, wie erläutert, bestens zur Verbrennung mit dem Gasbrenner geeignet ist. Hinzu kommt noch, daß eine PROX-Stufe eine externe Luftzudosierung mit dem entsprechendem Regelaufwand benötigt.

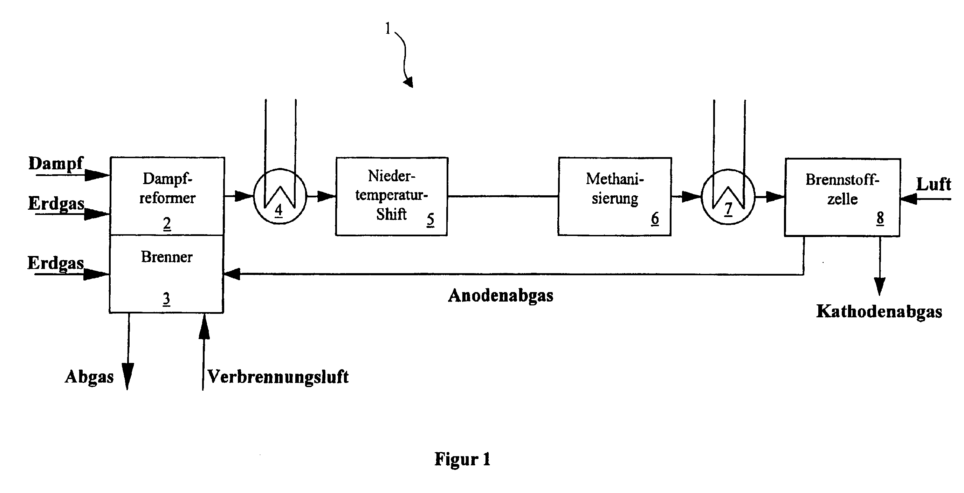

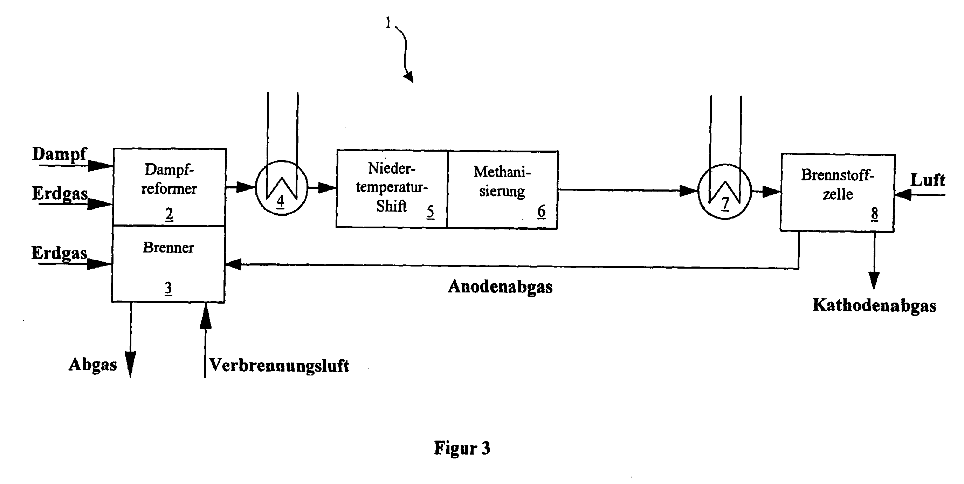

Die Erfindung wird an Hand der Figuren 1 bis 4 näher erläutert. Die Figur 3 zeigt ein Verfahrensschema für eine kombinierte Kraft-Wärmeanlage (1) gemäß der Erfindung. Die Kraft-Wärmeanlage (1) besteht aus einem Dampfreformer (2) der mit Hilfe des Brenners (3) beheizt wird. Der Brenner wird während der Startphase mit Erdgas betrieben, während des stationären Betriebs jedoch überwiegend mit dem Anodenabgas. Das Abgas des Brenners wird an die Umgebung abgegeben. Zur Reformierung von Erdgas wird der Dampfreformer mit Erdgas und Dampf versorgt.

Zur Entfernung von Kohlenmonoxid aus dem Reformat wird es durch einen Niedertemperatur-Shiftreaktor (5) geleitet, der bei einer Temperatur von etwa 180 bis 250 °C betrieben wird. Als Katalysator wird in diesem Shiftreaktor bevorzugt ein Cu/Zn-Shiftkatalysator eingesetzt.

Das Reformatgas verläßt den Dampfreformer mit einer Temperatur von etwa 650 °C und muß daher vor Eintritt in den Shiftreaktor (5) mit Hilfe eines Wärmetauschers (4) auf die Eingangstemperatur des Shiftreaktors abgekühlt werden. Dies geschieht mit dem Wärmetauscher (4). Die dem Reformat entnommene Wärmeenergie wird der Raumheizung zur Verfügung gestellt.

Nach Verlassen des Shiftreaktors enthält das Reformatgas noch eine Konzentration an Kohlenmonoxid, die der Gleichgewichtskonzentration bei der Ausgangstemperatur des Shiftreaktors von etwa 180 bis 250 °C entspricht. Sie liegt bei den genannten Temperaturen unter 0,5 Vol.-%. Zur weiteren Verminderung des Kohlenmonoxidgehaltes wird erfindungsgemäß eine Methanisierungsreaktion in einem Methanisierungsreaktor (6) eingesetzt. Als Methanisierungskatalysator eignet sich zum Beispiel ein Ruthenium-Katalysator.

Das den Methanisierungsreaktor (6) verlassende Reformat wird in der Brennstoffzellenanlage (8) unter Gewinnung elektrischer Energie mit dem Sauerstoff der Luft umgesetzt. Der im Reformat enthaltene Wasserstoff wird zu etwa 80 Vol.-% an der Anode oxidiert. Die restlichen 20 Vol.-% verlassen die Brennstoffzellenanlage mit dem Anodenabgas zusammen mit dem bezüglich der elektrischen Energiegewinnung in den Brennstoffzellen inerten Bestandteilen des Reformates wie Methan, Stickstoff, Kohlendioxid und Wasserdampf.

Die Methanisierungsreaktion geht zwar zu Lasten des Wasserstoffgehaltes des Reformates, ist jedoch wesentlich einfacher zu führen als die präferentielle Oxidation (PROX). Das zusätzlich erzeugte Methan wird mit dem Anodenabgas der Brennstoffzellenanlage (8) zum Brenner des Dampfreformers geführt und dort unter Zufuhr von Verbrennungsluft verbrannt.

Die Verfahrensschema der Figuren 1 bis 3 unterscheiden sich in der Art und Weise wie die Temperatur der Reformates auf die Arbeitstemperatur der Brennstoffzellenanlage von etwa 60 bis 80 °C abgekühlt wird.

Gemäß Figur 1 arbeitet der Methanisierungsreaktor (6) auf demselben Temperaturniveau wie der Niedertemperatur-Shiftreaktor (5). Die Temperatur des den Methanisierungsreaktors verlassenden Reformates muß daher mit einem Wärmetauscher (7) auf die Arbeitstemperatur der Brennstoffzellenanlage (8) abgesenkt werden. Die dem Reformat entzogene Wärmeenergie wird wieder der Raumheizung oder Warmwasserbereitung zugeführt.

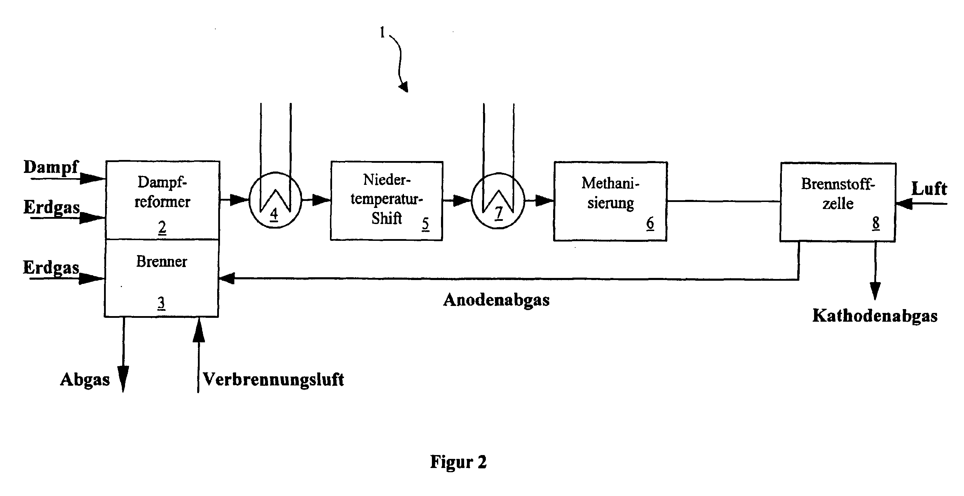

Gemäß dem Verfahrensschema von Figur 2 wird der Methanisierungsreaktor (6) auf dem Temperaturniveau der Brennstoffzellenanlage betrieben. Daher muß der zusätzliche Wärmetauscher (7) in diesem Fall zwischen Niedertemperatur-Shiftreaktor (5) und Methanisierungsreaktor (6) angeordnet werden.

Figur 3 stellt eine Variante von Figur 1 dar. Niedertemperatur-Shiftreaktor und Methanisierungsreaktor sind hier in einem einzigen Gehäuse hintereinander angeordnet. Diese Ausführungsform ermöglicht einen sehr kompakten Aufbau der Kraft-Wärmeanlage.

Unabhängig von den Verfahrensvarianten der Figuren 1 bis 3 wird die Kraft-Wärmeanlage wie folgt betrieben: Als Primärenergieträger wird Erdgas eingesetzt, welches im wesentlichen aus Methan besteht. Ein Gemisch aus Erdgas und Wasserdampf wird im Dampfreformer durch Teilreformierung in ein Wasserstoff, Kohlenmonoxid und Methan enthaltendes Reformatgas überführt. Dieses Reformatgas wird nach Abkühlung im Wärmetauscher im Niedertemperatur-Shiftreaktor zur Verminderung des Kohlenmonoxidgehaltes des Reformatgases auf weniger als 0,5 Vol.-% behandelt. Anschließend wird der verbleibende Gehalt des Reformatgases an Kohlenmonoxid im Methanisierungsreaktor auf eine restliche Konzentration von weniger als 100 Vol.-ppm vermindert. Das resultierende Produktgas wird der Brennstoffzellenanlage als Brenngas zugeführt, nachdem es auf die Arbeitstemperatur der Brennstoffzellenanlage abgekühlt wurde. Das Anodenabgas der Brennstoffzellenanlage dient wiederum als Brennstoff für den Gasbrenner des Dampfreformers.

Bevorzugt wird die Teilreformierung des Erdgas/Wasserdampf-Gemisches im Dampfreformer durch Anpassen der Arbeitstemperatur des Dampfreformers so geführt, daß das Reformatgas noch wenigstens 5 bis 10 Vol.-% Methan enthält. Dieser Methangehalt kann durch entsprechende Herabsetzung der Arbeitstemperatur des Dampfreformers auf Werte zwischen etwa 500 und 750 °C gewährleistet werden. Auf Grund der Teilreformierung ist der Gehalt des Reformates an Kohlenmonoxid geringer als bei einer vollständigen Reformierung, so daß eine nachgeschaltete Niedertemperatur-Shiftreaktion ausreichend ist, um die Konzentration des Kohlenmonoxids im Reformatgas unter 0,5 Vol.-% zu senken. Bei vollständiger Reformierung des Erdgas/Wasserdampf-Gemisches enthält das Reformat etwa 10 Vol.-% Kohlenmonoxid. Das gemäß der Erfindung nur zum Teil reformierte Gasgemisch enthält weniger als 5 Vol.-% Kohlenmonoxid.

Gemäß dem vorgeschlagenen Verfahren enthält das als Brennstoff zum Gasbrenner des Dampfreformers zurückgeführte Anodenabgas einen so hohen Methangehalt, daß mit einem Ionisationsdetektor das Vorhandensein der Flamme eindeutig festgestellt werden kann.

Das vorgeschlagene Verfahren beschreibt den Dauerbetrieb der Kraft-Wärmeanlage. Bei Anfahren der Anlage wird der Gasbrenner des Dampfreformers zunächst mit externem Erdgas und Verbrennungsluft betrieben. Erst nach Erreichen der Betriebstemperatur der Anlage kann die externe Versorgung des Gasbrenners mit Erdgas abgeschaltet und der Gasbrenner ausschließlich mit dem Anodenabgas der Brennstoffzellenanlage betrieben werden. Während der Anfahrphase ist die Sicherheit der Brennerüberwachung mittels Ionisationsdetektor durch den Betrieb des Brenners mit externem Erdgas gewährleistet. Aber auch der ausschließliche Brennerbetrieb mit Anodenabgas ist inhärent sicher, da das Anodenabgas durch die Verfahrensführung zwangsläufig einen ausreichenden Gehalt an Methan enthält.

Das Verfahren kann aufgrund der Rückkopplung des Anodenabgases zum Brenner des Dampfreformers selbststabilisierend, beziehungsweise selbstregulierend, betrieben werden. Sollte aufgrund einer zu hohen Brennertemperatur der Wirkungsgrad der Reformierung ansteigen und somit der Methangehalt im Reformat abnehmen, so wird auch weniger Methan mit dem Anodenabgas zum Brenner zurückgeführt, was zu einer Verminderung der Heizleistung und damit zu einer Abnahme des Wirkungsgrades der Reformierung führt. Im umgekehrten Fall nimmt der Methangehalt im Reformat bei sinkender Reformierungstemperatur zu, so daß der höhere Methangehalt im Anodenabgas zu einer Erhöhung der Heizleistung des Brenners und damit zu einer verstärkten Reformierung führt. Das Verfahren verfügt also über eine negative Rückkopplung, die bei entsprechender Dämpfung des Systems dazu führt, daß das Verfahren einen stabilen Arbeitspunkt einnimmt. Ein besonderer Vorteil dieser Verfahrensvariante ist die Tatsache, daß auf Grund dieser inhärenten Selbstregelung der Brenner nicht mit Erdgas versorgt werden muß und daher eine Gasregelstrecke hierfür entfällt.

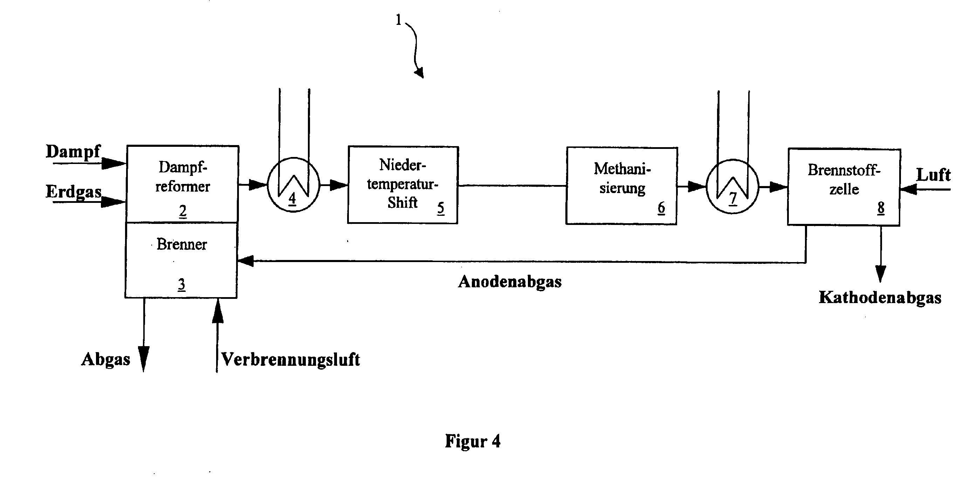

Diese Eigenschaft des erfindungsgemäßen Verfahrens erlaubt es, auch beim Anfahren der kombinierten Kraft-Wärmeanlage den Brenner des Dampfreformers völlig ohne externe Erdgaszufuhr zu betreiben. Diese besonders bevorzugte Verfahrensvariante ist für das Verfahrensschema von Figur 1 in Figur 4 dargestellt. Aber auch die Ausführungsformen der Figuren 2 und 3 können so betrieben werden. Während des Anfahrens des Dampfreformers von Raumtemperatur an passiert das Erdgas den Reformer zuerst unverändert und wird mit dem Anodenabgas zum Brenner zurückgeführt. Der Brenner arbeitet daher während des Anfahrens mit seiner vollen Heizleistung. Mit steigender Temperatur des Dampfreformers vermindert sich der Methangehalt im Reformat zugunsten von Wasserstoff und die Heizleistung des Brenners sinkt bis ein stabiler Betriebszustand erreicht ist.

## Patentansprüche

1. Kombinierte Kraft-Wärmeanlage mit integriertem Gaserzeugungssystem enthaltend einen mit einem Gasbrenner beheizten Dampfreformer, der ein Gemisch aus Kohlenwasserstoffen und Wasserdampf in ein Wasserstoff und Kohlenmonoxid enthaltenden Reformatgasstrom überführt, ein mehrere Stufen umfassendes Reaktorsystem zur Entfernung von Kohlenmonoxid aus dem Reformatgasstrom, Wärmetauscher zur Auskopplung von Wärmeenergie aus dem Reformatgasstrom sowie eine Brennstoffzellenanlage mit einer Arbeitstemperatur zur Erzeugung elektrischer Energie durch katalytische Umsetzung des im Reformatgas enthaltenen Wasserstoffs mit Sauerstoff in den Brennstoffzellen, wobei der Reformatgasstrom den Anoden der Brennstoffzellenanlage zugeführt und das Anodenabgas der Brennstoffzellenanlage über eine Gasleitung dem Gasbrenner als Brennstoff zugeführt wird, wobei das Reaktorsystem zur Entfernung von Kohlenmonoxid aus dem Reformatgasstrom einen Niedertemperatur-Shiftreaktor und einen nachgeschalteten Methanisierungsreaktor enthält und ein erster Wärmetauscher zur Kühlung des den Dampfreformer verlassenden Reformatgasstromes auf die Eingangstemperatur des Niedertemperatur-Shiftreaktors im Reformatgasstrom zwischen Dampfreformer und Niedertemperatur-Shiftreaktor angeordnet ist und ein zweiter Wärmetauscher die Temperatur des Reformates auf die Arbeitstemperatur der Brennstoffzellenanlage herabsetzt, wobei der Niedertemperatur-Shiftreaktor und Methanisierungsreaktor hintereinander in einem einzigen Gehäuse angeordnet sind.

2. Kombinierte Kraft- Wärmeanlage nach Anspruch 1,
**dadurch gekennzeichnet,**
**dass** als Kohlenwasserstoffe Erdgas eingesetzt wird.

3. Kombinierte Kraft- Wärmeanlage nach Anspruch 1,
**dadurch gekennzeichnet,**
**dass** der Niedertemperatur-Shiftreaktor einen Cu/ZnO-Shiftkatalysator enthält.

4. Kombinierte Kraft- Wärmeanlage nach Anspruch 1,
**dadurch gekennzeichnet,**
**dass** der Methanisierungsreaktor einen Ruthenium enthaltenden Katalysator enthält.

5. Verfahren zum Betreiben der kombinierten Kraft-Wärmeanlage nach Anspruch 1, wobei ein Erdgas/Wasserdampf-Gemisch im Dampfreformer durch Teilreformierung in ein Wasserstoff, Kohlenmonoxid und Methan enthaltendes Reformatgas überführt und dieses Reformatgas nach Abkühlung in einem Wärmetauscher im Niedertemperatur-Shiftreaktor zur Verminderung des Kohlenmonoxidgehaltes des Reformatgases auf weniger als 0,5 Vol.-% behandelt und anschliessend der verbleibende Gehalt des Reformatgases an Kohlenmonoxid im Methanisierungsreaktor auf eine restliche Konzentration von weniger als 100 Vol.-ppm vermindert und das resultierende Produktgas gegebenenfalls nach Abkühlung auf die Arbeitstemperatur der Brennstoffzellenanlage als Brenngas der Brennstoffzellenanlage zugeführt wird, mit deren Anodenabgas der Gasbrenner des Dampfreformers betrieben wird, wobei der Niedertemperatur-Shiftreaktor und Methanisierungsreaktor hintereinander in einem einzigen Gehäuse angeordnet sind.

6. Verfahren nach Anspruch 5,
**dadurch gekennzeichnet,**
**dass** die Flamme des Gasbrenners mit Hilfe eines Ionisationsdetektors überwacht wird.

7. Verfahren nach Anspruch 6,
**dadurch gekennzeichnet,**
**dass** die Teilreformierung des Erdgas/Wasserdampf-Gemisch im Dampfreformer durch Anpassen der Arbeitstemperatur des Dampfreformers so geführt wird, dass das Reformatgas noch wenigstens 5 bis 10 Vor.-% Methan enthält.

8. Verfahren nach Anspruch 7,
**dadurch gekennzeichnet,**
**dass** der Niedertemperatur-Shiftreaktor mit einer Arbeitstemperatur zwischen 180 und 250 DEG C betrieben wird.

9. Verfahren nach Anspruch 8,
**dadurch gekennzeichnet,**
**dass** der Methanisierungsreaktor mit derselben Arbeitstemperatur wie der Niedertemperatur-Shiftreaktor betrieben wird und die Temperatur des Reformates hinter dem Methanisierungsreaktor auf die Arbeitstemperatur der Brennstoffzellenanlage von 60 bis 90 DEG C herabgesetzt wird.

10. Verfahren nach Anspruch 8,
**dadurch gekennzeichnet,**
**dass** der Methanisierungsreaktor mit der Arbeitstemperatur der Brennstoffzellenanlage betrieben und die Temperatur des Reformates vor dem Eintritt in den Methanisierungsreaktor auf diese Temperatur abgesenkt wird.

11. Verfahren nach Anspruch 5,
**dadurch gekennzeichnet,**
**dass** es selbstregulierend betrieben wird.

## Claims

1. A combined power/heating system having integrated gas generation system containing a steam reformer, which is heated using a gas burner, and which converts a mixture made of hydrocarbons and water steam into a reformate gas stream containing hydrogen and carbon monoxide, a reactor system, which comprises multiple stages, for removing carbon monoxide from the reformate gas stream, heat exchangers for coupling heat energy out of the reformate gas stream, and a fuel cell system having an operating temperature for generating electrical energy by catalytic reaction of the hydrogen contained in the reformate gas with oxygen in the fuel cells, the reformate gas stream being supplied to the anodes of the fuel cell system and the anode exhaust gas of the fuel cell system being supplied via a gas line to the gas burner as a fuel, the reactor system for removing carbon monoxide from the reformate gas stream containing a low-temperature shift reactor and a downstream methanization reactor and a first heat exchanger, for cooling the reformate gas stream leaving the steam reformer to the intake temperature of the low-temperature shift reactor, being situated in the reformate gas stream between steam reformer and low-temperature shift reactor, and a second heat exchanger reducing the temperature of the reformate to the operating temperature of the fuel cell system, the low-temperature shift reactor and methanization reactor being situated one behind the other in a single housing.

2. The combined power/heating system according to Claim 1, **characterized in that** natural gas is used as the hydrocarbons.

3. The combined power/heating system according to Claim 1, **characterized in that** the low-temperature shift reactor contains a Cu/ZnO shift catalyst.

4. The combined power/heating system according to Claim 1, **characterized in that** the methanization reactor contains a catalyst containing ruthenium.

5. A method for operating the combined power/heating system according to Claim 1, a natural gas/water steam mixture being converted in the steam reformer by partial reformation into a reformate gas containing hydrogen, carbon monoxide, and methane, and this reformate gas, after cooling in a heat exchanger, being treated in the low-temperature shift reactor to reduce the carbon monoxide content of the reformate gas to less than 0.5 vol.-% and subsequently the remaining content of the reformate gas of carbon monoxide being reduced in the methanization reactor to a residual concentration of less than 100 vol.-ppm and the resulting product gas, optionally after cooling to the operating temperature of the fuel cell system, being supplied as combustion gas to the fuel cell system, using whose anode exhaust gas the gas burner of the steam reformer is operated, the low-temperature shift reactor and methanization reactor being situated one behind the other in a single housing.

6. The method according to Claim 5, **characterized in that** the flame of the gas burner is monitored with the aid of an ionization detector.

7. The method according to Claim 6, **characterized in that** the partial reformation of the natural gas/water steam mixture in the steam reformer is guided by adapting the operating temperature of the steam reformer in such a way that the reformate gas still contains at least 5 to 10 vol.-% methane.

8. The method according to Claim 7, **characterized in that** the low-temperature shift reactor is operated at an operating temperature between 180 and 250°C.

9. The method according to Claim 8, **characterized in that** the methanization reactor is operated at the same operating temperature as the low-temperature shift reactor and the temperature of the reformate is reduced after the methanization reactor to the operating temperature of the fuel cell system of 60 to 90°C.

10. The method according to Claim 8, **characterized in that** the methanization reactor is operated at the operating temperature of the fuel cell system and the temperature of the reformate is reduced to this temperature before the intake into the methanization reactor.

11. The method according to Claim 5, **characterized in that** it is operated in a self-regulating way.

## Revendications

1. Installation de cogénération comprenant un système de production de gaz intégré comprenant un reformeur de vapeur chauffé par un brûleur à gaz qui transforme un mélange d'hydrocarbures et de vapeur d'eau en un flux de gaz reformé contenant de l'hydrogène et du monoxyde de carbone, un système de réacteurs présentant plusieurs étapes pour éliminer le monoxyde de carbone du flux de gaz reformé, des échangeurs de chaleur pour l'accouplement de déstockage de l'énergie thermique du flux de gaz reformé ainsi qu'une installation à piles à combustible avec une température de travail pour produire de l'énergie électrique par une conversion catalytique de l'hydrogène contenu dans le gaz reformé avec de l'oxygène dans les piles à combustible, sachant que le flux de gaz reformé est amené aux anodes de l'installation à piles à combustible et le gaz évacué des anodes est amené comme combustible au brûleur à gaz par une conduite de gaz, sachant que le système de réacteur pour éliminer le monoxyde de carbone du flux de gaz reformé a un réacteur à dérive basse température et un réacteur de méthanisation en aval, et un premier échangeur de chaleur, pour refroidir le flux de gaz reformé quittant le reformeur de vapeur à la température d'entrée du réacteur à dérive basse température, est placé dans le flux de gaz reformé entre le reformeur de vapeur et le réacteur à dérive basse température, et un deuxième échangeur de chaleur baisse la température du produit reformé à la température de travail de l'installation à piles à combustible, sachant que le réacteur à dérive basse température et le réacteur de méthanisation sont placés l'un derrière l'autre dans un seul logement.

2. Installation de cogénération selon la revendication 1, **caractérisé en ce que** l'on emploie du gaz naturel comme hydrocarbure.

3. Installation de cogénération selon la revendication 1, **caractérisé en ce que** le réacteur à dérive basse température a un catalysateur à dérive Cu/ZnO.

4. Installation de cogénération selon la revendication 1, **caractérisé en ce que** le réacteur de méthanisation a un catalysateur contenant du ruthénium.

5. Procédé pour exploiter l'installation de cogénération selon la revendication 1, sachant qu'un mélange gaz naturel/vapeur d'eau est transformé par une reformation partielle dans le reformeur de vapeur en gaz reformé contenant de l'hydrogène, du monoxyde de carbone et du méthane et ce gaz reformé est traité, après refroidissement dans un échangeur de chaleur, dans le réacteur à dérive basse température pour réduire la teneur en monoxyde de carbone du gaz reformé à moins de 0,5 % en volume et ensuite la teneur restante en monoxyde de carbone du gaz reformé dans le réacteur de méthanisation est réduite à une concentration restante de moins de 100 ppm en volume et le produit gazeux résultant est amené, le cas échéant, après refroidissement à la température de travail de l'installation à piles à combustible, comme gaz combustible à l'installation à piles à combustible, avec le gaz évacué des anodes de laquelle le brûleur à gaz du reformeur de vapeur est exploité, sachant que le réacteur à dérive basse température et le réacteur de méthanisation sont placés l'un derrière l'autre dans un seul logement.

6. Procédé selon la revendication 5, **caractérisé en ce que** la flamme du brûleur à gaz est surveillée à l'aide d'un détecteur à ionisation.

7. Procédé selon la revendication 6, **caractérisé en ce que** la reformation partielle du mélange gaz naturel/vapeur d'eau dans le reformeur de vapeur par adaptation de la température de travail du reformeur de vapeur est ainsi effectuée que le gaz reformé contient encore au moins 5 à 10% en volume de méthane.

8. Procédé selon la revendication 7, **caractérisé en ce que** le réacteur à dérive basse température est exploité à une température de travail entre 180 et 250 DEG C.

9. Procédé selon la revendication 8, **caractérisé en ce que** le réacteur de méthanisation est exploité à la même température de travail que le réacteur à dérive basse température et la température du gaz reformé derrière le réacteur de méthanisation est baissée à la température de travail de l'installation à piles à combustible de 60 à 90 DEG C.

10. Procédé selon la revendication 8, **caractérisé en ce que** le réacteur de méthanisation est exploité à la température de travail de l'installation à piles à combustible et la température du produit reformé est baissée à cette température avant l'entrée dans le réacteur de méthanisation.

11. Procédé selon la revendication 5, **caractérisé en ce qu'**il s'auto-régule.
